**Europäisches Patentamt**

(19) **European Patent Office**

**Office européen des brevets**

(11) Numéro de publication: **0 041 454
B1**

(12) # FASCICULE DE BREVET EUROPEEN

(45) Date de publication du fascicule du brevet:
01.08.84

(51) Int. Cl.³: **F 16 L 3/18**

(21) Numéro de dépôt: **81400865.2**

(22) Date de dépôt: **27.05.81**

(54) **Dispositif de maintien d'une tuyauterie sur un support.**

(30) Priorité: **29.05.80 FR 8011949**

(43) Date de publication de la demande:
**09.12.81 Bulletin 81/49**

(45) Mention de la délivrance du brevet:
**01.08.84 Bulletin 84/31**

(84) Etats contractants désignés:
**BE DE GB IT**

(56) Documents cités:
**EP - A - 0 031 767
FR - A - 2 406 869
US - A - 2 826 436
US - A - 3 254 399
US - A - 3 965 938
US - A - 4 128 219**

(73) Titulaire: **Framatome, Tour Fiat 1 place de la Coupole,
F-92400 Courbevoie (FR)**

(72) Inventeur: **Anglaret, Gilbert, 11, avenue de Villars,
F-78150 Le Chesnay (FR)**
Inventeur: **Wolff, René, 17, rue Paul Doumer, F-78110 Le
Vesinet (FR)**
Inventeur: **Le Gallo, Michel, rue du Bout du Haut
Banville, F-14480 Creully (FR)**
Inventeur: **Leroyer, Jean-Louis, Vieux, F-14930 Maltot
(FR)**

(74) Mandataire: **Saint-Martin, René et al,
CREUSOT-LOIRE 15 rue Pasquier, F-75383 Paris
Cedex 08 (FR)**

## Description

La présente invention se rapporte à un dispositif capable de maintenir un élément droit de tuyauterie sur une structure résistante en reprenant les efforts radiaux appliqués à la tuyauterie.

Ce dispositif de maintien fait partie d'un système combiné de supportage de sortie radiale de tuyauterie vapeur comprenant par ailleurs un point fixe de maintien de la tuyauterie. Un tel système est utilisé dans une centrale nucléaire.

Il existe différents types de dispositifs de maintien d'une tuyauterie sur une structure résistante. Dans FR-A-2 406 869 de la demanderesse, un élément droit de tuyauterie est solidaire de plaques carrées qui sont engagées entre deux glissières solidaires de la structure fixe. Par ailleurs l'élément de tuyauterie est attaché à la structure par deux bielles positionnées à distance des glissières et des plaques carrées associées. Chacune de ces bielles est articulée d'une part à l'élément de tuyauterie et d'autre part à la structure fixe. Ces bielles permettent de reprendre les efforts parallèles aux faces des glissières. Si le maintien radial dans toutes les directions est assuré par les glissières et par les bielles articulées, par contre la disposition de ces éléments, le long de la tuyauterie, engendre les efforts au niveau des fixations de ces éléments déportés de la structure fixe.

Le EP-A-31 767, publié le 8.7.1981, est compris dans l'état de la technique selon l'article 54(3) CBE, et décrit un dispositif de maintien d'une tuyauterie à au moins une semelle d'ancrage scellée à une structure de support, comportant des pièces d'attelage rectilignes réunies à la semelle d'ancrage et attachées par des articulations à la tuyauterie de manière que leurs axes longitudinaux soient perpendiculaires à l'axe de tuyauterie, caractérisé par le fait que les pièces d'attelage situées sensiblement dans un plan perpendiculaire à l'axe de tuyauterie ont leurs axes longitudinaux disposés selon les côtés d'un triangle de manière à transmettre les couples de torsion appliqués à la tuyauterie.

La présente invention a pour objet un dispositif de maintien d'une tuyauterie à une structure résistance permettant de reprendre les efforts de torsion ou de flexion de la tuyauterie dans toutes les directions possibles. La conception du dispositif permet de l'adapter à des efforts plus ou moins importants. Le pont thermique, entre la tuyauterie et les parties métalliques ancrées à la structure de support est réduit au minimum et les interruptions calorifuge sur la tuyauterie sont limitées. Le dispositif autorise des gradients de température importantes du fait de l'absence de guidage par patins et permet de maintenir les ancrages, sur la structure résistante à un niveau de température acceptable. Le montage est simple et les possibilités de réglage sont très larges. Ce dispositif autorise aussi des déplacements axiaux faibles de la tuyauterie.

Le dispositif de maintien d'une tuyauterie selon l'invention comporte au moins une semelle d'ancrage scellée à une structure de support et au moins un ensemble qui contient au moins deux pièces d'attelage rectilignes, chaque pièce d'attelage étant attachée par des articulations à une semelle d'ancrage et per l'intermédiaire d'un collier annulaire à la tuyauterie chacun desdits ensembles de pièces d'attelage étant disposé dans un plan perpendiculaire à l'axe de la tuyauterie et il est caractérisé par le fait que le collier annulaire est réalisé en au moins deux parties réunies les unes aux autres et comporte un alèsage que présente au moins un pan plan et parallèle à l'axe de la tuyauterie et qui est appliqué contre une portée extérieure de la tuyauterie dont la section droite correspond à celle dudit alèsage.

Selon une autre caractéristique le dispositif comprend une pluralité d'ensembles de pièces d'attelage, chacun des dits ensembles contenant trois pièces d'attelage.

L'invention va maintenant être décrite avec plus de détails en se référant à un mode de réalisation donné à titre d'exemple et représenté par les dessins annexés.

La figure 1 est une vue d'ensemble d'un dispositif de maintien selon l'invention.

La figure 2 représente une coupe selon A-A de la figure 1.

Le dispositif selon l'invention est intégré dans un système combiné de supportage tel que celui décrit dans EP-A-31 767.

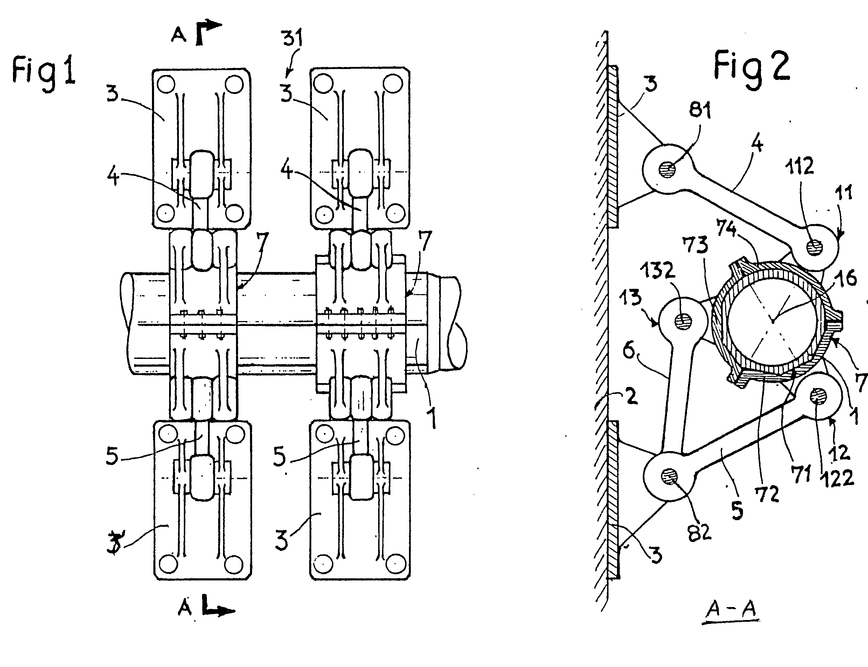

Sur la figure 1, la tuyauterie est maintenue sur la structure de support résistante par l'intermédiaire d'une semelle d'ancrage 3. Cette semelle est en plusieurs éléments séparés. Elle est ancrée à la structure 2 à l'aide par exemple de tirants de scellement précontraints.

La tuyauterie 1 est reliée à la semelle d'ancrage 3 par des pièces d'attelage 4, 5, 6. Chaque pièce d'attelage est rectiligne à la manière d'une bielle. Elle est reliée à ses extrémités, par deux articulations, d'une part à la tuyauterie d'autre part à la semelle. Les pièces d'attelage 4 sont reliées par les articulations 11 à la tuyauterie et par les articulations 81 à la semelle. Les pièces d'attelage 5 sont reliées par les articulations 12 à la tuyauterie et par les articulations 82 à la semelle. Les pièces d'attelage 6 sont reliées par les articulations 13 à la tuyauterie et par les articulations 82 à la semelle.

Les axes longitudinaux des pièces d'attelage sont disposés dans une pluralité de plans perpendiculaires à l'axe 16 de la tuyauterie. Chaque plan contient trois pièces d'attelage. Ainsi le plan A.A contient trois pièces d'attelage 4, 5, 6.

Les pièces d'attelage 4 sont espacées dans un plan parallèle à l'axe de la tuyauterie en étant perpendiculaires à cet axe. De même les pièces d'attelage 5 ou 6 sont espacées dans des plans parallèles à l'axe de la tuyauterie en étant perpendiculaires à cet axe.

Les axes longitudinaux des pièces d'attelage d'un même plan perpendiculaire à l'axe de la tuyauterie sont disposés à l'extérieur de la tuyauterie selon les côtés d'un triangle. Les trois pièces d'attelage 4, 5, 6 d'un même plan sont articulées à la semelle par deux articulations seulement, les pièces d'attelage 5 et 6 ayant un axe d'articulation commun. Les articulations 81 et 82 des pièces d'attelage sur la semelle sont des articulations à rotule. Ces types d'articulation sont nécessaires pour autoriser les mouvements de dilatation de la tuyauterie selon l'axe 16. Chaque pièce d'attelage 4 est articulée à une chape 3 par l'intermédiaire d'un axe d'articulation 81 et d'une rotule. Chaque pièce d'attelage 5 est articulée avec une pièce d'attelage 6 à une double chape 3 par l'intermédiaire d'un axe d'articulation 82 commun et d'une rotule.

Les axes d'articulation 81 et 82 sont parallèles à l'axe de la tuyauterie. Les articulations 11, 12, 13 sont des articulations à rotule. Chaque articulation 11, 12, 13 comprend d'une part un tourillon, 112, 122, 132 respectivement, qui est parallèle à la tuyauterie et d'autre part une rotule. Les tourillons sont portés par des colliers annulaires 7. Chaque collier comporte un alésage formant au moins un pan 71 plan et parallèle à l'axe 16. Ce collier ceinture la tuyauterie. Celle-ci comporte une portée extérieure ayant au moins un pan parallèle à l'axe 16 de manière que cette portée ne soit pas une surface de révolution cylindrique. La section droite de l'alésage du collier correspond à la section droite extérieure de la portée de la tuyauterie. Chaque collier est serré par pincement sur la portée de la tuyauterie. Il est relié par les articulations 11, 12, 13 aux pièces d'attelage 4, 5, 6.

Le collier est réalisé en plusieurs parties 72, 73, 74 qui sont réunies les unes aux autres par boulonnage. Les articulations 11, 12, 13 des pièces d'attelage d'un même plan perpendiculaire à l'axe de la tuyauterie sont au nombre de 3 et sont situées à 120° l'une par rapport à l'autre. Le collier est alors en 3 parties, chaque partie étant reliée par une articulation à une pièce d'attelage.

De préférence, la portée de la tuyauterie est une surface prismatique ou une surface partiellement prismatique et cylindrique.

Les différents axes d'articulation 81 des pièces d'attelage 4 sont alignés parallèlement à l'axe de l'élément de tuyauterie. De même les différents axes d'articulation 82 des pièces d'attelage 5 et 6 sont alignés parallèlement à l'axe de la tuyauterie. Chaque axe longitudinal de pièce d'attelage passe par un axe 112, 122, 132 et par un axe d'articulation 81 ou 82 sur la semelle. Les axes longitudinaux de trois pièces d'attelage 4, 5, 6 sont disposés selon les trois côtés d'un triangle fictif dont un des sommets est occupé par l'axe d'articulation 82. De préférence les pièces d'attelage 4, 5, 6 ont des longueurs égales. Les axes longitudinaux des pièces d'attelage d'un même plan perpendiculaire à l'axe de tuyauterie sont concourants deux à deux.

Il est bien entendu que l'invention n'est pas limitée au mode de réalisation qui vient d'être décrit mais qu'elle englobe de nombreuses variantes. En particulier le collier annulaire peut être prévu pour être utilisé dans un dispositif de maintien qui comprend une butée d'appui solidaire de la structure résistante et en contact par une surface de glissement avec un butoir solidaire de la tuyauterie, et au moins quatre pièces d'attelage réparties deux à deux dans des plans perpendiculaires à l'axe de la tuyauterie dont deux sont situées de part et d'autre de la butée et du butoir. Un tel dispositif est décrit dans EP-A-31 767.

## Revendications

1. Dispositif de maintien d'une tuyauterie à au moins une semelle d'ancrage (3) scellée à une structure de support, comportant au moins un ensemble qui contient au moins deux pièces d'attelage (4,5,6) rectilignes, chaque pièce d'attelage étant attachée par des articulations (81,82,11,12,13) à une semelle d'ancrage(3) et par l'intermédiaire d'un collier annulaire (7) à la tuyauterie, chacun desdits ensembles de pièces d'attelage (4,5,6) étant disposé dans un plan perpendiculaire à l'axe de la tuyauterie caractérisé par le fait que le collier annulaire (7) est réalisé en au moins deux parties (72,73,74) réunies les unes aux autres et comporte un alésage qui présente au moins un pan (71) plan et parallèle à l'axe (16) de la tuyauterie et qui est appliqué contre une portée extérieure de la tuyauterie (1) dont la section droite correspond à celle dudit alésage.

2. Dispositif selon la revendication 1 caractérisé par le fait qu'il comprend une pluralité d'ensemble de pièces d'attelage, chacun des dits ensembles contenant trois pièces d'attelage (4,5,6).

3. Dispositif de maintien selon la revendication 2 caractérisé par le fait que ledit collier (7) est en trois parties (72,73,74) et en ce que les articulations des pièces d'attelage (4,5,6) sur ledit collier (7) sont situées à 120° l'une de l'autre.

4. Dispositif de maintien selon l'une quelconque des revendications précédentes caractérisé par le fait que les articulations (81,82,11,12,13) sont à rotule.

5. Dispositif selon l'une quelconque des revendications précédentes, caractérisé par le fait que les pièces d'attelage (4,5,6) d'un plan perpendiculaire à l'axe de la tuyauterie sont disposées selon les côtés d'un triangle.

6. Dispositif selon l'une quelconque des revendications précédentes caractérisé par le fait que les pièces d'attelage sont articulées à la semelle (3) par deux articulations (81,82), deux des pièces d'attelage (5,6) ayant un axe d'articulation commun (82).

## Patentansprüche

1. Haltevorrichtung einer Rohrleitung an mindestens einer an einer Stützkonstruktion befestigten Verankerungsplatte (3), bestehend aus mindestens einem Satz mit mindestens zwei geraden Kupplungsstücke (4, 5, 6), wobei jedes Kupplungsstück über Gelenke (81, 82, 11, 12, 13) an einer Verankerungsplatte (3) und über eine kreisförmige Rohrschelle (7) an der Rohrschelle befestigt ist, und wobei jeder Satz Kupplungsstücke (4, 5, 6) in einer zur Rohrleitungsachse senkrechten Ebene angeordnet ist, dadurch gekennzeichnet, dass die kreisförmige Rohrschelle (7) aus mindestens zwei miteinander verbundenen Teilen (72, 73, 74) besteht und eine Bohrung umfasst, die mindestens eine zur Achse (16) der Rohrleitung parallele Planfläche (71) aufweist und auf einer Lagerfläche aussen auf der Rohrleitung (1) aufliegt, wobei der Querschnitt demjenigen der Bohrung entspricht.

2. Vorrichtung nach Anspruch 1, dadurch gekennzeichnet, dass sie mehrere Sätze Kupplungsstücke umfasst, wobei jeder Satz aus drei Kupplungsstücken (4, 5, 6) besteht.

3. Haltevorrichtung nach Anspruch 2, dadurch gekennzeichnet, dass diese Rohrschelle (7) aus drei Teilen (72, 73, 74) besteht, und dass die Gelenke der Kupplungsstücke (4, 5, 6) auf dieser Rohrschelle (7) um 120° versetzt sind.

4. Haltevorrichtung nach einem der vorhergehenden Ansprüche, dadurch gekennzeichnet, dass die Gelenke (81, 82, 11, 12 13) Kugelgelenke sind.

5. Vorrichtung nach einem der vorhergehenden Ansprüche, dadurch gekennzeichnet dass die Kupplungsstücke (4, 5, 6) einer senkrecht zur Rohrleitungsachse verlaufenden Ebene gemäss den Seiten eines Dreieckes angeordnet sind.

6. Vorrichtung nach einem der vorhergehenden Ansprüche, dadurch gekennzeichnet, dass die Kupplungsstücke über zwei Gelenke (81, 82) an der Verankerungsplatte (3) angelenkt sind, wobei zwei dieser Kupplungsstücke (5, 6) eine gemeinsame Gelenkachse (82) haben.

## Claims

1. A device for supporting a pipeline, with at least one anchoring plate (3) sealed to a support structure, comprising at least one assembly which contains at least two rectilinear coupling components (4,5,6), each coupling component being attached by articulations (81,82,11,12,13) to an anchoring plate (3) and through the intermediacy of an annular collar (7) to the pipeline, each of the said assemblies of coupling components (4,5,6) being arranged in a plane at right angles to the axis of the pipeline, characterised in that the annular collar (7) is produced in at least two parts (72,73,74) which are joined to each other and comprises a bore which has a least one face (71) flat and parallel to the axis (16) of the pipeline and which is applied against an external bearing of the pipeline (1) whose cross-section corresponds to that of the said bore.

2. A device according to Claim 1, characterised in that it comprises a plurality of assemblies of coupling components, each of the said assemblies containing three coupling components (4,5,6).

3. A supporting device according to Claim 2, characterised in that the said collar (7) is in three parts (72,73,74) and in that the articulations of the coupling components (4,5,6) on the said collar (7) are situated at 120° from each other.

4. A supporting device according to any one of the preceding claims, characterised in that the articulations (81,82,11,12,13) are socket-type.

5. A device according to any one of the preceding claims, characterised in that the coupling components (4,5,6) in a plane at right angles to the axis of the pipeline are arranged as the sides of a triangle.

6. A device according to any one of the preceding claims, characterised in that the coupling components are articulated to the plate (3) by two articulations (81,82), two of the coupling components (5,6) having a common axis of articulation (82).

Fig 1

Fig 2

A — A

0 041 454